# EUROPÄISCHE PATENTANMELDUNG

(11) **EP 1 978 434 A2**
(43) Veröffentlichungstag der Anmeldung: **08.10.2008**
(21) Anmeldenummer: 08006003.1
(22) Anmeldetag: 28.03.2008
(51) Int. Cl.: G05D 9/12, B67D 5/32

(54) **Anlage zur Befüllung von Transporttanks mit Flüssigkeiten**

(30) Priorität: 29.03.2007 DE 202007004744 U
(71) Anmelder: Titus Wintermantel GmbH, 78199 Bräunlingen (DE)
(72) Erfinder: Wintermantel, Titus, 78199 Bräunlingen (DE); Schwörer, Arno, 78199 Bräunlingen (DE)
(74) Vertreter: Neunert, Peter Andreas

(57) **Zusammenfassung**

Die Erfindung betrifft eine Anlage und ein Verfahren zur Befüllung von Transporttanks, insbesondere von Fahrzeugbehältern (20), mit insbesondere Wasser gefährdenden Flüssigkeiten, insbesondere mit flüssigem Streugut, bestehend aus einem stationären Vorratsbehälter mit Pumpenaggregat (10), dessen Befüllschlauch (13) mit dem Transporttank (26) verbindbar ist, einer mit dem Pumpenaggregat (10) verbundenen Steuerschaltung (14) sowie einem im Transporttank (20) vorgesehenen Grenzwertgeber (22), der mit der Steuerschaltung (14) des Pumpenaggregates (10) elektrisch verbunden ist und ein die Steuerpumpe (11) abschaltendes Schaltsignal erzeugt, wenn der Transporttank (20) bis zu einem vorgegebenen Niveau (21a) befüllt ist, wobei sowohl die Steuerschaltung (14) des Pumpenaggregats (10) als auch der Grenzwertgeber (22) des Transporttanks (20) jeweils mit Sende- und Empfangsmodulen (15, 25) verbunden sind und dass diese Sende- und Empfangsmodule (15, 25) drahtlos über eine bidirektionale Übertragungsstrecke (30) miteinander verbunden sind.

## Beschreibung

Die Erfindung betrifft eine Anlage zur Befüllung von Transporttanks mit Flüssigkeiten gemäß Oberbegriff des Anspruchs 1. Sie ist insbesondere bestimmt für Anlagen zur Befüllung von Fahrzeugbehältern mit Wasser gefährdenden Flüssigkeiten, z.B. mit flüssigem Streugut.

Die Erfindung betrifft weiterhin ein Verfahren zur Befüllung von Transporttanks mit Flüssigkeiten gemäß Oberbegriff des Anspruchs 11.

Solche Anlagen bestehen aus einem stationären Vorratsbehälter für das flüssige Streugut, welches zur Betankung mittels eines Befüllschlauchs in einen Fahrzeugbehälter gepumpt wird. Zu diesem Zweck ist der stationäre Vorratsbehälter mit einem Pumpenaggregat ausgerüstet, das aus einer von einem Motor angetriebenen Füllpumpe besteht. Solche Anlagen werden zum Beispiel zum Betanken der Transporttanks von Winterdienstfahrzeugen mit einer Soleflüssigkeit eingesetzt. Der Befüllschlauch, der einerends mit dem Pumpenaggregat verbunden ist, wird andererends mittels einer lösbaren Kupplung zur Befüllung mit dem Transporttank verbunden.

Um eine Überfüllung des Transporttanks zu verhindern, ist dieser mit einem Grenzwertgeber ausgestattet, welcher bei Erreichen des maximalen Füllstandes ein den Pumpenmotor abschaltendes Signal erzeugt. Üblicherweise ist der Grenzwertgeber so geschaltet, dass er bei Erreichen des maximalen Füllstandes im Transporttank ein elektrisches Signal erzeugt, das über eine elektrische Leitung einer den Pumpenmotor steuernden Steuerschaltung über eine elektrische Leitung zugeleitet wird. Bei Erreichen des maximalen Füllstandes im Transporttank öffnet ein im Grenzwertgeber vorgesehener Schalter, so dass das Schaltsignal null wird und der Pumpenmotor abgeschaltet wird. Damit ist verhindert, dass der Transporttank überfüllt wird.

Beim Befüllen des Transporttanks mit elektrisch gut leitenden Flüssigkeiten, wie z.B. im flüssigen Streugut enthaltenen Chloriden und Azetaten, kann es jedoch zu Problemen kommen, wenn diese Flüssigkeiten in das elektrische Verbindungskabel zwischen Grenzwertgeber und Steuerschaltung des Pumpenmotors gelangen, so dass durch einen Kurzschluss in der Verbindungsleitung ein Dauersignal vorgetäuscht wird und damit der Pumpenmotor nicht abgeschaltet wird, obwohl die maximale Füllhöhe des Transporttanks bereits erreicht ist.

Dies führt zur Überfüllung des Transporttanks, wodurch einerseits der Tank beschädigt werden kann und andererseits das flüssige Streugut unkontrolliert in den Untergrund gelangt.

Weitere Störungen mit gleichem Ergebnis können auftreten, wenn die elektromechanischen Steckkontakte und Kabel beschädigt werden, so dass eine Ansteuerung des Pumpenmotors und damit die Betankung des Streufahrzeuges unmöglich gemacht wird.

Der vorliegenden Erfindung liegt die Aufgabe zugrunde, die erläuterte Anlage so zu gestalten, dass die Signalübertragung weder durch Kabelkurzschlüsse noch durch mechanische Beschädigungen des Kabels bzw. der Steckkontakte gestört wird und eine Überfüllung des Transporttanks sicher vermieden wird.

Gelöst wird diese Aufgabe nach dem Grundgedanken der vorliegenden Erfindung dadurch, dass die Kabelverbindung zwischen Grenzwertgeber und Steuerschaltung des Pumpenaggregates durch eine drahtlose, bidirektionale Übertragungsstrecke ersetzt wird.

Nach dem Vorschlag gemäß Anspruch 1 sind zu diesem Zweck sowohl die Steuerschaltung des Pumpenaggregats als auch der Grenzwertgeber des Transporttankes jeweils mit einem Sende- und Empfangsmodul ausgestattet, welche drahtlos über die bidirektionale Übertragungsstrecke miteinander verbunden sind. Als Sende- und Empfangsmodule können gemäß Anspruch 2 bidirektional wirkende Funkmodule oder gemäß Anspruch 3 bidirektional wirkende Infrarotsensoren verwendet werden.

Auch kann das dem Tank zugeordnete Sende- und Empfangsmodul nach dem Vorschlag gemäß Anspruch 4 mit einem Transponder kombiniert werden, mit welchem gleichzeitig der zu befüllende Transporttank identifiziert wird.

Gemäß Anspruch 8 ist vorteilhafterweise in diesem Fall das Empfangsmodul der Steuerschaltung des Pumpenaggregats über eine Datenschnittstelle mit einem Rechner verbunden, in dessen Datenbank die Abfüllmengen sowie die Adresse des Transporttanks zur Betriebsdatenbearbeitung erfasst werden. Damit ist gewährleistet, dass nur autorisierte Fahrzeuge eine zugeordnete Menge Streugut aus der Pumpenanlage entnehmen können. Durch die Aufzeichnung der Fördermenge pro Zeiteinheit mittels Durchflussmesser bzw. durch die Festlegung der Fördermenge pro Zeiteinheit der Befüllpumpe kann die Abfüllmenge erfasst und in die Datenbank übertragen werden. In der Datenbank werden alle wesentlichen Betriebsdaten gespeichert und mittels eines Druckers in Papierform ausgegeben.

Die bevorzugte Beschaltung des Grenzwertgebers ist mit den Ansprüchen 5 und 6 angegeben.

Nach dem Vorschlag gemäß Anspruch 7 sollte die maximale Reichweite der Übertragungsstrecke der Länge des Befüllschlauchs entsprechen, so dass nur bei hergestellter Schlauchverbindung eine Befüllung möglich ist.

Die Vorschläge nach den Ansprüchen 9 und 10 beziehen sich auf die mögliche Stromversorgung der Sende- und Empfangsmodule bzw. des Grenzwertgebers.

Die Ansprüche 11 bis 15 sind auf ein korrespondierendes Verfahren gerichtet, wobei die Ansprüche 12 bis 15 bevorzugte Verfahrensvarianten des Verfahrens gemäß Anspruch 11 beschreiben.

Die erfindungsgemäßen Vorschläge erhöhen nicht nur die Sicherheit der Anlage. Vielmehr machen sie auch ein zeitraubendes Kabelhandlung überflüssig.

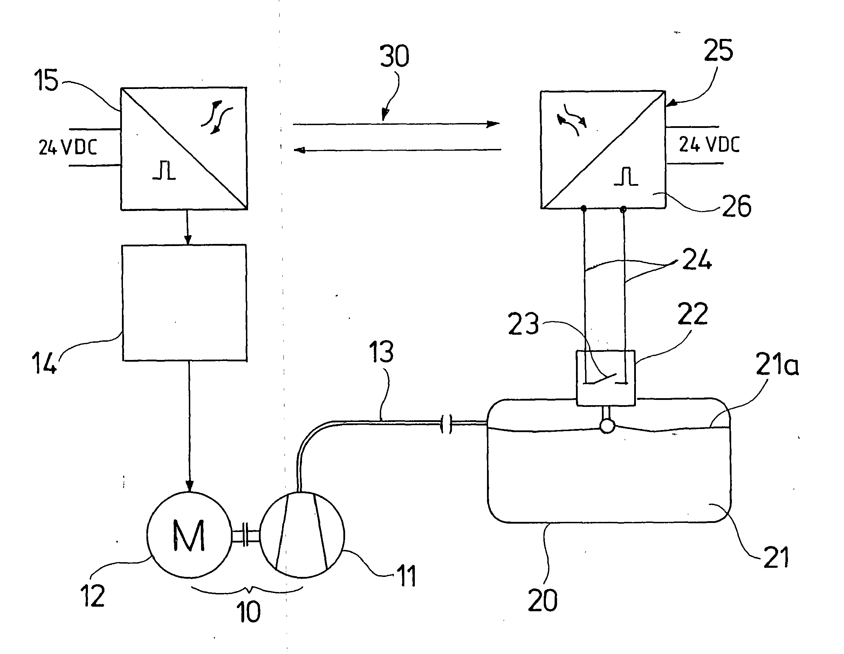

Aufbau und Funktionsweise der erfindungsgemäß gestalteten Anlage sind nachstehend ausführlicher anhand eines in der Zeichnung schematisch dargestellten Blockschaltbildes erläutert.

Das Pumpenaggregat 10, bestehend aus der vom Motor 12 angetriebenen Füllpumpe 11, ist über eine Steuerschaltung 14 mit einem bidirektionalen Sende- und Empfangsmodul 15, z.B. entsprechenden Funkmodulen bzw. Infrarotsensoren, verbunden.

Ebenso ist der dem Fahrzeugbehälter 20 zugeordnete Grenzwertgeber 22 mit einem bidirektionalen Sende- und Empfangsmodul 25 verbunden.

Die Signalübertragung zwischen den Sende- und Empfangsmodulen erfolgt drahtlos über die bidirektionale Übertragungsstrecke 30.

Zur Betankung des Fahrzeugbehälters 20 wird die Füllpumpe 11 über einen Befüllschlauch 13 mit diesem verbunden. Die Stromversorgung des dem stationären Vorratsbehälter zugeordneten Sende- und Empfangsmoduls 15 erfolgt mit einer stationären Stromquelle, die Stromversorgung des dem Fahrzeugbehälter 20 zugeordneten Sendeempfangsmoduls 25 erfolgt mittels der Stromquelle des Transportfahrzeuges, wobei üblicherweise Stromquellen mit einer Gleichspannung zwischen 10 und 30 V verwendet werden.

Zur Betankung des auf einem Winterdienstfahrzeug montierten Behälters mit flüssigem Streugut, üblicherweise einer Soleflüssigkeit, ist das Ende des Befüllschlauches 13 mit der Füllpumpe 11 verbunden, wobei die Länge des Befüllschlauches 13 ein Maß für die maximale Reichweite der Übertragungsstrecke 30 ist.

Zur Einleitung des Befüllvorganges wird der Motor 12 des Pumpenaggregates 10 über die Steuerschaltung 14 eingeschaltet, worauf das Sende- und Empfangsmodul 15 über die Übertragungsstrecke 30 dem am Fahrzeug vorgesehenen Sende- und Empfangsmodul 25 ein Signal zusendet. Soweit der Fahrzeugbehälter 20 noch nicht gefüllt ist, das Niveau 21a des flüssigen Streugutes 21 noch nicht den Maximalstand erreicht hat, ist der Schalter 23 des Grenzwertgebers 22 geschlossen, so dass die vom Impulsgeber 16 erzeugte Impulsfolge den im Ausgangsstromkreis 24 des Impulsgebers 26 liegenden Schalter 23 passiert und ein "Startfrei"-Signal erzeugt wird, über das das Sende- und Empfangsmodul 25, die Übertragungsstrecke 30 und das Sende- und Empfangsmodul 15 der Steuerschaltung 14 zugesandt wird.

Diese Abfrage mit der Impulsfolge wird ständig wiederholt, wobei eine Impulsfrequenz von 1 Hertz vorteilhaft ist,'also 1 mal pro Sekunde von der Steuerschaltung 14 ein Abfragesignal erzeugt wird.

Sowie das flüssige Streugut 21 im Fahrzeugbehälter 20 das maximale Niveau 21a erreicht hat, wird der Schalter 23 des als Füllstandssensor ausgebildeten Grenzwertgebers 22 geöffnet, so dass für eine Dauer, die größer als die Impulsdauer von z.B. einer Sekunde ist, kein rückmeldendes aktivierendes Signal der Steuerschaltung zugeführt wird, worauf der Antriebsmotor 12 des Pumpenaggregates 10 abgeschaltet wird. Damit ist der Befüllvorgang unterbrochen. Diese Verfahrensweise gewährleistet, dass der Fahrzeugbehälter 20 nur bis zum maximalen Niveau 21a befüllt werden kann.

### Bezugszeichenliste

- 10: Pumpenaggregat
- 11: Füllpumpe
- 12: Motor
- 13: Befüllschlauch
- 14: Steuerschaltung
- 15: Sende- und Empfangsmodul

- 20: Fahrzeugbehälter
- 21: flüssiges Streugut
- 21a: Flüssigkeitsniveau
- 22: Grenzwertgeber
- 23: Schalter
- 24: Ausgangsstromkreis des Impulsgebers 26
- 25: Sende- und Empfangsmodul
- 26: Impulsgeber

- 30: Bidirektionale Übertragungsstrecke

## Patentansprüche

1. Anlage zur Befüllung von Transporttanks, insbesondere von Fahrzeugbehältern, mit insbesondere Wasser gefährdenden Flüssigkeiten, insbesondere mit flüssigem Streugut, bestehend aus einem stationären Vorratsbehälter mit Pumpenaggregat, dessen Befüllschlauch mit dem Transporttank verbindbar ist, einer mit dem Pumpenaggregat verbundenen Steuerschaltung sowie einem im Transporttank vorgesehenen Grenzwertgeber, der mit der Steuerschaltung des Pumpenaggregates elektrisch verbunden ist und ein die Steuerpumpe abschaltendes Schaltsignal erzeugt, wenn der Transporttank bis zu einem vorgegebenen Niveau befüllt ist,
**dadurch gekennzeichnet, dass** sowohl die Steuerschaltung (14) des Pumpenaggregats als auch der Grenzwertgeber (22) des Transporttanks (20) jeweils mit Sende- und Empfangsmodulen (15, 25) verbunden sind und dass diese Sende- und Empfangsmodule (15, 25) drahtlos über eine bidirektionale Übertragungsstrecke (30) miteinander verbunden sind.

2. Anlage nach Anspruch 1,
**dadurch gekennzeichnet, dass** zur Übertragung der Steuersignale bidirektional wirkende Funkmodule (15, 25) vorgesehen sind.

3. Anlage nach Anspruch 1,
**dadurch gekennzeichnet, dass** zur Übertragung der Steuersignale bidirektional wirkende Infrarotsensoren vorgesehen sind.

4. Anlage nach Anspruch 1, 2 oder 3,
**dadurch gekennzeichnet, dass** das dem Transporttank (20) zugeordnete Sende- und Empfangsmodul (25) einem Transponder zur gleichzeitigen Identifikation des zu befüllenden Transporttanks aufweist.

5. Anlage nach einem der Ansprüche 1 bis 4,
**dadurch gekennzeichnet, dass** das dem Transporttank (20) zugeordnete Sende- und Empfangsmodul (25) einen Impulsgeber (26) aufweist, welcher bei Einschalten der Steuerschaltung (14) des Pumpenaggregats (10) eine Impulsfolge erzeugt, dass der Grenzwertgeber (22) einen Schalter (23) aufweist, der bei gefülltem Tank (20) offen und im Übrigen geschlossen ist und dass der Schalter (23) des Grenzwertgebers (22) im Ausgangsstromkreis (24) des Impulsgebers (26) liegt, welcher bei geschlossenem Schalter (23) ein Einschaltsignal erzeugt, das dem dem Empfangsmodul (15) der Steuerschaltung (14) des Pumpenaggregats (10) zugesandt wird und diese zur Einschaltung des Pumpenaggregats (10) aktiviert, während bei geöffnetem Schalter (23) ein die Steuerschaltung (14) des Pumpenaggregats (10) deaktivierendes Signal erzeugt wird.

6. Anlage nach Anspruch 5,
**dadurch gekennzeichnet, dass** die Impulsfolge eine Frequenz von 1 Hz hat.

7. Anlage nach einem der Ansprüche 1 bis 6,
**dadurch gekennzeichnet, dass** die maximale Reichweite der Übertragungsstrecke (30) der Länge des Befüllschlauchs (13) entspricht.

8. Anlage nach Anspruch 4,
**dadurch gekennzeichnet, dass** das Empfangsmodul (15) der Steuerschaltung (14) des Pumpenaggregats (10) über eine Datenschnittstelle mit einem Rechner verbunden ist, in dessen Datenbank die Abfüllmenge sowie die Adresse des Transporttanks zur Betriebsdatenverarbeitung erfasst werden.

9. Anlage nach einem der Ansprüche 1 bis 8,
**dadurch gekennzeichnet, dass** die Stromversorgung der Sende- und Empfangsmodule (15, 25) durch die Stromversorgung des Pumpenaggregats (10) bzw. die Stromversorgung des Transportfahrzeuges erfolgt.

10. Anlage nach einem der Ansprüche 1 bis 8,
**dadurch gekennzeichnet, dass** zur Stromversorgung des dem Tank (20) zugeordneten Sende- und Empfangsmoduls (25) und des Grenzwertgebers (22) eine autarke Stromquelle, vorzugsweise ein Akkumulator, vorgesehen ist.

11. Verfahren zur Befüllung von Transporttanks, insbesondere von Fahrzeugbehältern, mit insbesondere Wasser gefährdenden Flüssigkeiten, insbesondere mit flüssigem Streugut, mittels einer Anlage bestehend aus einem stationären Vorratsbehälter mit Pumpenaggregat, dessen Befüllschlauch mit dem Transporttank verbunden wird, einer mit dem Pumpenaggregat verbundenen Steuerschaltung sowie einem im Transporttank vorgesehenen Grenzwertgeber, der mit der Steuerschaltung des Pumpenaggregates elektrisch verbunden ist und ein die Steuerpumpe abschaltendes Schaltsignal erzeugt, wenn der Transporttank bis zu einem vorgegebenen Niveau befüllt ist,
**dadurch gekennzeichnet, dass** sowohl die Steuerschaltung (14) des Pumpenaggregats (10) als auch der Grenzwertgeber (22) des Transporttanks (20) jeweils mit Sende- und Empfangsmodulen (15, 25) verbunden werden und dass diese Sende- und Empfangsmodule (15, 25) drahtlos über eine bidirektionale Übertragungsstrecke (30) miteinander verbunden werden.

12. Verfahren nach Anspruch 11,
**dadurch gekennzeichnet, dass** das dem Transporttank (20) zugeordnete Sende- und Empfangsmodul (25) einen Impulsgeber (26) aufweist, welcher bei Einschalten der Steuerschaltung (14) des Pumpenaggregats (10) eine Impulsfolge erzeugt, dass der Grenzwertgeber (22) einen Schalter (23) aufweist, der bei gefülltem Tank (20) offen und im Übrigen geschlossen ist und dass der Schalter (23) des Grenzwertgebers (22) im Ausgangsstromkreis (24) des Impulsgebers (26) liegt, welcher bei geschlossenem Schalter (23) ein Einschaltsignal erzeugt, das dem Empfangsmodul (15) der Steuerschaltung (14) des Pumpenaggregats (10) zugesandt wird und diese zur Einschaltung des Pumpenaggregats (10) aktiviert, während bei geöffnetem Schalter (23) ein die Steuerschaltung (14) des Pumpenaggregats (10) deaktivierendes Signal erzeugt wird.

13. Verfahren nach Anspruch 11 oder 12,
**dadurch gekennzeichnet, dass** das Empfangsmodul (15) der Steuerschaltung (14) des Pumpenaggregats (10) über eine Datenschnittstelle mit einem Rechner verbunden wird, in dessen Datenbank die Abfüllmenge sowie die Adresse des Transporttanks zur Betriebsdatenverarbeitung erfasst werden.

14. Verfahren nach einem der Ansprüche 11 bis 13,
**dadurch gekennzeichnet, dass** die Stromversorgung der Sende- und Empfangsmodule (15, 25) durch die Stromversorgung des Pumpenaggregats (10) bzw. die Stromversorgung des Transportfahrzeuges erfolgt.

15. Verfahren nach einem der Ansprüche 11 bis 13,
**dadurch gekennzeichnet, dass** zur Stromversorgung des dem Tank (20) zugeordneten Sende- und Empfangsmoduls (25) und des Grenzwertgebers (22) eine autarke Stromquelle, vorzugsweise ein Akkumulator, verwendet wird.
